Europäisches Patentamt

European Patent Office

Office européen des brevets

(19)

(11) Veröffentlichungsnummer: **0 203 554**
**B1**

(12) **EUROPÄISCHE PATENTSCHRIFT**

(45) Veröffentlichungstag der Patentschrift:
26.10.88

(51) Int. Cl.⁴: **C 10 L 1/18**

(21) Anmeldenummer: **86107073.8**

(22) Anmeldetag: **24.05.86**

(54) Verwendung von Ethylen-Terpolymerisaten als Additive für Mineralöle und Mineralöldestillate.

(30) Priorität: 29.05.85 DE 3519196
13.05.86 DE 3616056

(43) Veröffentlichungstag der Anmeldung:
03.12.86 Patentblatt 86/49

(45) Bekanntmachung des Hinweises auf die Patenterteilung:
26.10.88 Patentblatt 88/43

(84) Benannte Vertragsstaaten:
AT BE CH DE FR GB IT LI LU NL SE

(56) Entgegenhaltungen:
EP - A - 0 003 489
EP - A - 0 099 646
GB - A - 2 065 676

(73) Patentinhaber: HOECHST AKTIENGESELLSCHAFT,
Postfach 80 03 20, D-6230 Frankfurt am Main 80 (DE)

(72) Erfinder: Payer, Wolfgang, Dr., Dipl.-Chem.,
Zedernweg 58, D-4230 Wesel 1 (DE)
Erfinder: Bexten, Ludger, Dr., Dipl.-Chem., Im Freihof 9,
D-4224 Hünxe (DE)
Erfinder: Hobes, John, Dr., Dipl.-Chem., Ernastrasse 2 b,
D-4220 Dinslaken (DE)

## Beschreibung

Die vorliegende Erfindung betrifft die Verwendung von Terpolymerisaten aus Ethylen, Diisobutylen und Vinylacetat zur Verbesserung der Fliessfähigkeit und des Kälteverhaltens von Mineralölen und Mineralöldestillaten.

Mineralöle wie Rohöl, Dieselkraftstoff oder Heizöl enthalten in unterschiedlichen Mengen langkettige Paraffine (Wachse) gelöst, die bei niedrigen Temperaturen auskristallisieren. Dadurch entstehen Feststoffablagerungen, die häufig zu Störungen bei Gewinnung, Transport und Einsatz von Mineralölen führen. So kann z.B. die Arbeitsfähigkeit von Förder- und Transporteinrichtungen für Rohöl bis zu deren völligem Ausfall beeinträchtigt werden. Bei Dieselmotoren und Feuerungsanlagen können Verstopfungen der Filter auftreten, die eine sichere Dosierung der Brennstoffe verhindern und schliesslich in einer Unterbrechung der Kraftstoff- bzw. Heizmittelzufuhr resultieren.

Um diese unerwünschte Feststoffbildung zu vermeiden, setzt man Mineralölen Additive zu, die der Entstehung von Paraffinkristallen und damit einem Anstieg der Viskosität der Öle entgegenwirken.

Das Fliess- und Kälteverhalten von Mineralölen und Mineralöldestillaten wird durch Angabe des Pour Points und des Cold-Filter-Plugging-Points (CFP-Point) beschrieben. Der Pour Point (bestimmt nach DIN 51 597) stellt die niedrigste Temperatur dar, bei welcher ein Mineralöl oder Mineralöldestillat gerade noch fliesst. Der Cold-Filter-Plugging-Point (bestimmt nach DIN 51 428) bezeichnet den Grenzwert der Filtrierbarkeit. Aus wirtschaftlichen Gründen ist man daran interessiert, dass ein einziges Additiv sowohl den Pour-Point als auch den Cold-Filter-Plugging-Point in die gewünschte Richtung beeinflusst.

Typische Pour Point-Erniedriger und Fliessverbesserer für Rohöle und Mitteldestillate sind Copolymerisate des Ethylens mit Carbonsäureestern des Vinylalkohols. Besonders bewährt haben sich unter ihnen Ethylen-Vinylacetat-Copolymerisate. Solche Mischpolymerisate und ihre Verwendung sind z.B. in der DE-PS 1 914 756 beschrieben. Ihre Herstellung erfolgt im allgemeinen durch Copolymerisation der Monomeren in Autoklaven bei Temperaturen von 80 bis 150°C und Drücken von 5 bis 15 MPa in Gegenwart von Peroxiden als Initiatoren und organischen Lösungsmitteln als Reaktionsmedium.

Ein Nachteil der Ethylen-Vinylacetat-Copolymerisate ist, dass sie wohl den CFP-Point von Mitteldestillaten verbessern, den Pour-Point aber nur wenig erniedrigen.

Es bestand daher die Aufgabe, Additive für Mineralöle bereitzustellen, die sowohl den CFP-Point als auch den Pour-Point fühlbar erniedrigen.

Die Erfindung besteht in der Verwendung von Terpolymerisaten mit einer mittleren Molmasse von 500 bis 10.000 g . mol$^{-1}$, die neben Ethylen 0,5 bis 20 Gew.-% Diisobutylen und 20 bis 35 Gew.-% Vinylacetat (jeweils bezogen auf das Terpolymerisat) enthalten und die je 100 $CH_2$-Gruppen 6 bis 20 $CH_3$-Gruppen in den Seitenketten aufweisen, die nicht aus dem Vinylacetat herrühren, als Additive für Mineralöle und Mineralöldestillate.

Es ist überraschend, dass die gestellte Aufgabe durch die erfindungsgemässe Verwendung bestimmter Terpolymerisate gelöst wird. Denn es war nicht vorauszusehen, dass Terpolymerisate aus Ethylen, Diisobutylen und Vinylacetat gleichzeitig den CFP-Point und den Pour-Point von Mineralölen und Mineralöldestillaten deutlich herabsetzen.

Zwar sind aus der EP 0 099 646 A1 Terpolymerisate aus Ethylen, Isoolefin, insbesondere Isobuten und Vinylacetat als Fliessverbesserer bekannt. Diese Produkte weisen jedoch nur geringe Wirksamkeit als Pour-Point- und CFP-Point-Erniedriger auf.

Die in einem Dampfphasenosmometer unter Verwendung von Toluol als Lösungsmittel gemessene mittlere Molmasse der erfindungsgemäss eingesetzten Terpolymerisate beträgt 500 bis 10.000 g . mol$^{-1}$, bevorzugt werden Polymerisate mit einer Molmasse von 1.000 bis 5.000 g . mol$^{-1}$.

Die als Additive für Mineralöle und Mineralöldestillate verwendeten Ethylen-Terpolymerisate enthalten 0,5 bis 20 Gew.-% Diisobutylen. Besonders bewährt haben sich Terpolymerisate mit einem Anteil von 1 bis 15 Gew.-% des $C_8$-Olefins (jeweils bezogen auf das Terpolymerisat).

Vinylacetat ist in den Terpolymerisaten in einem Anteil von 20 bis 35 Gew.-% enthalten, bevorzugt wird ein Anteil von 22 bis 30 Gew.-%, bezogen auf das Terpolymerisat.

Nach einer weiteren bevorzugten Ausgestaltung der Erfindung verwendet man Terpolymerisate, deren Schmelzviskosität (gemessen bei 140°C) 100 bis 1.000 mPa . s beträgt. Die Bestimmung der Schmelzviskosität erfolgt in einem Rotationsviskosimeter nach der Deutschen Norm DIN 53 019.

Die Terpolymerisate aus Ethylen, Diisobutylen und Vinylacetat enthalten Verzweigungen. Diese gehen zurück auf den Einbau des Diisobutylens und des Ethylens in das Makromolekül. Je 100 $CH_2$-Gruppen weisen die Terpolymerisate 6 bis $CH_3$-Gruppen in den Seitenketten auf, die nicht aus dem Vinylacetat herrühren. Bevorzugt eingesetzt werden nach der Erfindung Terpolymerisate, die 7 bis 15 $CH_3$-Gruppen je 100 $CH_2$-Gruppen in den Seitenketten enthalten.

Zur Herstellung der erfindungsgemäss verwendeten Terpolymerisate geht man von Gemischen aus Ethylen, Diisobutylen und Vinylacetat aus, die in Gegenwart Radikale bildender Initiatoren wie Peroxide bei Drücken oberhalb 50 mPa und bei Temperaturen von 150 bis 350°C in Abwesenheit von organischen Lösungsmitteln polymerisiert werden. Das Molekulargewicht der Terpolymerisate wird vorzugsweise durch das auch als Molekulargewichtsregler wirkende Diisobutylen eingestellt. Andere Molekulargewichtsregler wie Kohlenwasserstoffe, Aldehyde, Ketone können jedoch zusätzlich in einer Menge von 1 bis 5 Gew.-%, bezogen auf das Monomerengemisch, verwendet werden. Besonders geeignet als Molekulargewichtsregler ist Propionaldehyd. Zur Polymerisation werden Monomerengemische eingesetzt, die 79 bis 20 Gew.-% Ethylen, 1 bis 40 Gew.-% Diisobutylen und 20 bis 40 Gew-% Vinylacetat enthalten.

Im allgemeinen setzt man das Terpolymerisat den Mineralölen bzw. den Mineralölfraktionen in Form von 40 bis 60 Gew.-%igen Lösungen in einem aliphatischen oder aromatischen Kohlenwasserstoff oder in einem Kohlenwasserstoffgemisch zu. Sehr bewährt hat sich als Lösungsmittel z.B. Kerosin. Die Polymerisatmenge, bezogen auf Mineralöl bzw. Mineralölfraktion, soll 0,001 bis 2, vorzugsweise 0,005 bis 0,5 Gew.-%, betragen. Das Terpolymerisat kann allein oder auch zusammen mit anderen Additiven verwendet werden, beispielsweise mit Entwachsungshilfsmitteln, Korrosionsinhibitoren, Antioxidantien oder Schlamminhibitoren.

Die erfindungsgemässe Verwendung von Ethylen-Diisobutylen-Vinylacetat-Terpolymerisaten als Additive für Mineralöle und Mineralöldestillate wird durch die nachfolgenden Beispiele näher erläutert.

Die Beispiele A - C betreffen Herstellung und Eigenschaften von Ethylen-Diisobutylen-Vinylacetat-Terpolymerisaten. In den Beispielen D-F sind Herstellung und Eigenschaften von Polymerisaten beschrieben, die als Vergleichssubstanzen herangezogen werden.

In den Beispielen 1 - 3 sind Angaben über die Wirksamkeit der erfindungsgemäss als Additive verwendeten Terpolymerisate für Mineralöle und Mineralöldestillate zusammengestellt. Diesen Angaben werden in den Beispielen 4 - 6 mit Vergleichssubstanzen erhaltene Werte gegenübergestellt.

*Beispiel A - C*

*Herstellung von Ethylen-Diisobutylen-Vinylacetat-Terpolymerisaten*

Ethylen, Diisobutylen (technisches Diisobutylen mit ca. 75 Gew.-% 2,4,4-Trimethylpenten-1) und Vinylacetat werden kontinuierlich in einem Autoklaven polymerisiert. Das Monomerengemisch wird beim Reaktionsdruck in den Autoklaven eingespeist, nachdem die für die Aufrechterhaltung der Polymerisation erforderliche Menge Peroxid als Lösung in einer Benzinfraktion zugesetzt worden ist. Die Verweilzeit beträgt etwa 80 sec.

In entsprechender Weise erfolgt die Herstellung der Terpolymerisate der Beispiele D - F.

Die jeweiligen Polymerisationsbedingungen und die für die erhaltenen Polymere charakteristischen Eigenschaftswerte sind in Tabelle 1 zusammengestellt.

Der Vinylacetatgehalt in den Polymeren wird nach der Pyrolysemethode bestimmt. Hierzu werden 200 mg des Polymeren mit 300 mg reinem Polyethylen in einem Pyrolysekolben 5 Minuten auf 450°C erhitzt und die Spaltgase in einem 250 ml-Rundkolben aufgefangen. Die gebildete Essigsäure wird mit einer $NaJ/KJO_3$-Lösung umgesetzt und mit $Na_2S_2O_3$-Lösung das freiwerdende Jod titriert.

Die Bestimmung des Verzweigungsgrades der Polymerisate erfolgt durch H-NMR-Spektroskopie. Unter Verzweigungsgrad wird in den folgenden Beispielen die Anzahl $CH_3$-Gruppen je 100 $CH_2$-Gruppen mit Ausnahme der $CH_3$-Gruppen, die aus dem Acetatrest stammen, verstanden. Die Viskosität wird bei 140°C mit einem Rotovisco System MV 11 (Hersteller Haake, Karlsruhe) gemessen. Der Diisobutylen-Gehalt im Polymerisat wird durch 13 C-NMR-Spektroskopie ermittelt.

*Tabelle 1*

Herstellung und Eigenschaften der Ethylen-Diisobutylen-Vinylacetat-Terpolymerisate

| Beispiel | | A | B | C | D | E | F |
|---|---|---|---|---|---|---|---|
| Reaktionsbedingungen | | | | | | | |
| Druck | (MPa) | 150 | 150 | 150 | 150 | 150 | 150 |
| Temperatur | (°C) | 200 | 200 | 230 | 160 | 230 | 230 |
| Einsatzgemische | | | | | | | |
| Ethylen | (Gew.-%) | 56,5 | 60,4 | 61,5 | 65,3 | 70,4 | 70,9 |
| Isobutylen | (Gew.-%) | — | — | — | — | 15,0 | 14,9 |
| Diisobutylen | (Gew.-%) | 19,8 | 9,8 | 10,0 | 26,5 | — | — |
| Vinylacetat | (Gew.-%) | 23,7 | 28,1 | 27,2 | 19,1 | 15,1 | 25,4 |
| Initiator | (Gew.-ppm) | 7100 | 226 | 85 | | | |
| Propionaldehyd | (Gew.-ppm) | — | 1,7 | 1,3 | | | |
| Kennzeichnung der Polymerisate | | | | | | | |
| Verzweigung | ($CH_3$/100 $CH_2$) | 13,2 | 7,6 | 8,2 | 16,4 | | |
| Diisobutylen | (Gew.-%) | 5,6 | 3,4 | 3,4 | 8,1 | | |
| Vinylacetat | (Gew.-%) | 23,0 | 25,7 | 25,4 | 18,2 | 14,6 | 24,2 |
| Viskosität bei 140°C | (mPa . s) | 210 | 240 | 254 | 550 | 220 | 205 |

*Beispiele 1 - 6*

In den folgenden Beispielen 1 - 6 wird die Wirksamkeit verschiedener Ethylen-Diisobutylen-Vinylacetat- und Ethylen-Isobutylen-Vinylacetat-Terpolymerisate als Additive für Mineralöle und Mineralöldestillate anhand des CFPP-Tests (Kalt-Filter-Verstopfungspunkt-Test) und durch Bestimmung des Pour-Points beschrieben. Die Beispiele 1 - 3 beschreiben die Verwendung erfindungsgemässer Terpolymerisate, die Beispiele 4 - 6 betreffen den Einsatz von Terpolymerisaten, die ausserhalb der Erfindung liegen und dienen dem Vergleich. Die Durchführung des Tests erfolgt nach DIN 51 428, sie ist auch in J. of the Inst. of Petr., Bd. 52, Juni 1966, S. 173 bis 185 publiziert. Die Messung des Pour-Points erfolgt nach DIN 51 597.

Zur Prüfung werden drei Mitteldestillate M1, M2 und M3 eingesetzt, die durch die in Tabelle 2 zusammengestellten Eigenschaftswerte gekennzeichnet sind.

*Tabelle 2*

Charakteristik der Mitteldestillate

| | M 1 | M 2 | M 3 |
|---|---|---|---|
| Siedeanalyse (°C) | | | |
|   Siedeanfang | 180 | 209 | 182 |
|   5% | 202 | 281 | 213 |
|   50% | 297 | 289 | 281 |
|   90% | 357 | 356 | 349 |
|   Siedeende | 357 | 368 | 370 |
| Pour-Point (°C) | —6 | —9 | — |
| CFPP-Werte (°C) | +1 | —1 | —6 |

*Tabelle 3*

Wirksamkeit der erfindungsgemäss als Zusatz zu Mineralölfraktionen verwendeten Ethylen-Diisobutylen-Vinylacetat-Terpolymerisate (Beispiele 1 - 3) im Vergleich zu anderen Terpolymerisaten (Beispiele 4 - 6)

| | Polymerisat | | CFP-Wert (°C) | | | Pour Point (°C) | |
|---|---|---|---|---|---|---|---|
| Beispiel | aus Beispiel | Konzentration (ppm)* | M 1 | M 2 | M 3 | M 1 | M 2 |
| 1 | A | 100 | — 7 | — 4 | —10 | — | — |
| | | 300 | — | — 4 | — | — | — |
| | | 400 | —12 | —10 | — | —20 | —23 |
| 2 | B | 100 | — 9 | — 4 | —13 | — | — |
| | | 300 | — | — 4 | — | — | — |
| | | 400 | —14 | — 7 | — | —23 | —23 |
| 3 | C | 100 | — 8 | — 5 | —13 | — | — |
| | | 300 | — | — 9 | — | — | — |
| | | 400 | —14 | — 9 | — | —21 | —22 |
| 4 | D | 100 | — 6 | — 4 | —10 | — | — |
| | | 300 | — | — 5 | — | — | — |
| | | 400 | —10 | — 8 | — | —17 | —16 |
| 5 | E | 100 | — 2 | — 3 | — 9 | — | — |
| | | 300 | — | — 5 | — | — | — |
| | | 400 | — 4 | — 5 | — | —12 | —18 |
| 6 | F | 100 | + 1 | — 1 | — 8 | — | — |
| | | 300 | — | — 4 | — | — | — |
| | | 400 | 0 | — 4 | — | —18 | —24 |

Die in Tabelle 3 zusammengefassten Ergebnisse zeigen, dass nur wachsartige Terpolymerisate, die qualitativ Diisobutylen als Termometer und quantitativ 20 bis 35 Gew.-% Vinylacetat enthalten, sowohl den Pour Point als auch den CFP-Point in einem von der Praxis gewünschten Masse herabsetzen.

**Patentansprüche**

1. Verwendung von Terpolymerisaten mit einer mittleren Molmasse von 500 bis 10.000 g . mol$^{-1}$, die neben Ethylen 0,5 bis 20 Gew.-% Diisobutylen und 20 bis 35 Gew.-% Vinylacetat (jeweils bezogen auf das Terpolymerisat) enthalten und die je 100 CH$_2$-Gruppen 6 vis 20 CH$_3$-Gruppen in den Seitenketten aufweisen, die nicht aus dem Vinylacetat herrühren, als Additive für Mineralöle und Mineralöldestillate.

2. Verwendung von Terpolymerisaten nach Anspruch 1, dadurch gekennzeichnet, dass sie 1 bis 15 Gew.-% Diisobutylen (bezogen auf das Terpolymerisat) enthalten.

3. Verwendung von Terpolymerisaten nach Anspruch 1 und 2, dadurch gekennzeichnet, dass sie 22 bis 30 Gew.-% Vinylacetat (bezogen auf das Terpolymerisat) enthalten.

4. Verwendung von Terpolymerisaten nach einem oder mehreren der Ansprüche 1 bis 3, dadurch gekennzeichnet, dass die mittlere Molmasse 1.000 bis 5.000 g . mol$^{-1}$ beträgt.

5. Verwendung von Terpolymerisaten nach einem oder mehreren der Ansprüche 1 bis 4, dadurch gekennzeichnet, dass die Schmelzviskosität (gemessen bei 140°C) 100 bis 1.000 mPa . s beträgt.

6. Verwendung von Terpolymerisaten nach einem oder mehreren der Ansprüche 1 bis 5, dadurch gekennzeichnet, dass sie je 100 CH$_2$-Gruppen 7 bis

15 CH$_3$-Gruppen in den Seitenketten aufweisen, die nicht aus dem Vinylacetat herrühren.

7. Mineralöl- und Mineralöldestillatzubereitung, dadurch gekennzeichnet, dass sie 0,001 bis 2, vorzugsweise 0,005 bis 0,5 Gew.-% (bezogen auf das Mineralöl bzw. das Mineralöldestillat) eines Terpolymerisats mit einer mittleren Molmasse von 500 bis 10.000 g . mol$^{-1}$, enthält, das aus Ethylen und 0,5 bis 20 Gew.-% Diisobutylen und 20 bis 35 Gew.-% Vinylacetat (bezogen auf das Terpolymerisat) besteht und das je 100 CH$_2$-Gruppen 6 bis 20 CH$_3$-Gruppen in den Seitenkette aufweist, die nicht aus dem Vinylacetat herrühren.

## Claims

1. The use of terpolymers with an average molecular mass of 500 to 10,000 g × mol$^{-1}$, which, in addition to ethylene, contain 0.5 to 20 wt.% diisobutylene and 20 to 35 wt.% vinyl acetate (in each case related to the terpolymer) and which per 100 CH$_2$ groups exhibit 6 to 20 CH$_3$ groups in the side chains, which do not originate from the vinyl acetate, as additives for mineral oils and mineral oil distillates.

2. The use of terpolymers according to claim 1, characterised in that they contain 1 to 15 wt.% diisobutylene (related to the terpolymer).

3. The use of terpolymers according to claims 1 and 2, characterised in that they contain 22 to 30 wt.% vinyl acetate (related to the terpolymer).

4. The use of terpolymers according to one or several of the claims 1 to 3, characterised in that the average molecular mass is 1,000 to 5,000 g × mol$^{-1}$.

5. The use of terpolymers according to one or several of the claims 1 to 4, characterised in that the melt viscosity (measured at 140°C) is 100 to 1,000 mPa × sec.

6. The use of terpolymers according to one or several of the claims 1 to 5, characterised in that per 100 CH$_2$ groups they exhibit 7 to 15 CH$_3$ groups in the side chains, which do not originate from the vinyl acetate.

7. Mineral oil and mineral oil distillate preparation, characterised in that it contains 0.001 to 2, preferably 0.005 to 0.5 wt.% (related to the mineral oil or mineral oil distillate) of a terpolymer with an average molecular mass of 500 to 10,000 g × mol$^{-1}$, which consists of ethylene and 0.5 to 20 wt.% diisobutylene and 20 to 35 wt.% vinyl acetate (related to the terpolymer) and which per 100 CH$_2$ groups exhibits 6 to 20 CH$_3$ groups in the side chains, which do not originate from the vinyl acetate.

## Revendications

1. Utilisation de terpolymères d'une masse molaire de 500 à 10 000 g . mol$^{-1}$ qui contiennent, outre de l'éthylène, 0,5 à 20% en poids de diisobutylène et 20 à 35% en poids d'acétate de vinyle (rapportés chaque fois au terpolymère) et qui contiennent dans les chaînes latérales, pour 100 groupes CH$_2$, 6 à 20 groupes CH$_3$ qui ne dérivent pas de l'acétate de vinyle, comme additifs pour huiles minérales et distillats d'huiles minérales.

2. Utilisation de terpolymères selon la revendication 1, caractérisé en ce qu'ils contiennent 1 à 15% en poids de diisobutylène (rapporté au terpolymère).

3. Utilisation de terpolymères selon les revendications 1 et 2, caractérisé en ce qu'ils contiennent 22 à 30% en poids d'acétate de vinyle (rapporté au terpolymère).

4. Utilisation de terpolymères selon une ou plusieurs des revendications 1 à 3, caractérisé en ce que la masse molaire moyenne est de 1 000 à 5 000 g . mol$^{-1}$.

5. Utilisation de terpolymères selon une ou plusieurs des revendications 1 à 4, caractérisé en ce que la viscosité à l'état fondu (mesurée à 140°C) est de 100 à 1 000 mPa . s.

6. Utilisation de terpolymères selon une ou plusieurs des revendications 1 à 5, caractérisé en ce qu'ils présentent dans les chaînes latérales, pour 100 groupes CH$_2$, 7 à 15 groupes CH$_3$ qui ne dérivent pas de l'acétate de vinyle.

7. Préparation d'huile minérale ou de distillat d'huile minérale, caractérisé en ce qu'elle contient 0,001 à 2% en poids, de préférence 0,005 à 0,5% en poids (par rapport à l'huile minérale ou au distillat d'huile minérale) d'un terpolymère ayant une masse molaire moyenne de 500 à 10 000 g . mol$^{-1}$, qui consiste en éthylène et 0,5 à 20% en poids de diisobutylène et 20 à 35% en poids d'acétate de vinyle (rapportés au terpolymère) et qui présente dans les chaînes latérales, pour 100 groupes CH$_2$, 6 à 20 groupes CH$_3$ qui ne dérivent pas de l'acétate de vinyle.